# EUROPEAN PATENT APPLICATION

(11) **EP 3 312 043 A1**
(43) Date of publication of application: **25.04.2018**
(21) Application number: 16827411.6
(22) Date of filing: 04.07.2016
(51) Int. Cl.: B60L 11/18, B60L 7/14, B60R 16/03, H02J 7/00, H02J 7/16, H02P 9/04

(54) **VEHICULAR POWER SOURCE DEVICE AND METHOD OF CONTROLLING VEHICULAR POWER SOURCE DEVICE**

(30) Priority: 21.07.2015 JP 2015144449
(71) Applicant: Panasonic Intellectual Property Management Co., Ltd., Osaka-shi, Osaka 540-6207 (JP)
(72) Inventor: YOSHIKAWA, Akitaka, Osaka 540-6207 (JP); KUROSAWA, Youichi, Osaka 540-6207 (JP)
(74) Representative: Eisenführ Speiser
(86) International application number: PCT/JP2016/003177
(87) International publication number: WO 2017/013843

(57) **Abstract**

A vehicular power source device includes a first generator that generates electric power by rotating a rotor, a second generator that rotates at a higher rotation speed than an upper limit of a rotation speed of the first generator to generate electric power, a detector that detects the rotation speed of the first generator, and a controller that controls power generation of the first and second generators. The controller causes the first generator to generate electric power when the rotation speed of the first generator detected by the detector is not larger than the upper limit of the rotation speed of the first generator, and causes only the second generator to generate electric power when the rotation speed of the first generator detected by the detector is larger than the upper limit of the rotation speed of the first generator.

## Description

### TECHNICAL FIELD

The present invention relates to a vehicular power source device to be mounted on a vehicle and a method of controlling the vehicular power source device.

### BACKGROUND ART

Conventionally, in a hybrid vehicle, there is disclosed a technology for suppressing excessive rotation of a motor-driven generator when the vehicle is urgently decelerated in a state in which a driving axle rotates at a high rotation speed (see PTL 1, for example). In the technology described in PTL 1, a hybrid vehicle includes two motor-driven generators, that is, a generator and an electric motor. Electric power obtained by the generator is supplied to the electric motor, and torque generated by the electric motor suppresses a rotation speed of the generator, thereby suppressing the excessive rotation of the generator.

### Citation List

### Patent Literature

PTL 1: Unexamined Japanese Patent Publication No. 2010-111182

### SUMMARY OF THE INVENTION

An aspect according to the present invention provides a vehicular power source device to be mounted on a vehicle, the vehicular power source device including a first generator, a second generator, a detector, and a controller. The first generator generates electric power by rotating a rotor. The second generator generates electric power by rotating a rotor at a higher rotation speed than an upper limit of a rotation speed of the rotor in the first generator. The detector detects the rotation speed of the rotor in the first generator. The controller controls power generation of the first generator and the second generator. The controller causes the first generator to generate electric power when the rotation speed of the first generator detected by the detector is not larger than the upper limit of the rotation speed of the first generator, and causes only the second generator to generate electric power when the rotation speed of the first generator detected by the detector is larger than the upper limit of the rotation speed of the first generator.

An aspect according to the present invention provides a method of controlling a vehicular power source device to be mounted on a vehicle. The method includes detecting a rotation speed of a rotor, determining whether the detected rotation speed is larger than an upper limit of a rotation speed of a first generator, causing the first generator to generate electric power, and causing only a second generator that generates electric power by rotating a rotor at a higher rotation speed than the upper limit of rotation speed of the rotor in the first generator to generate electric power. The detecting the rotation speed of the rotor detects, by a detector, the rotation speed of the first generator that generates electric power by rotating the rotor. The determining whether the detected rotation speed is larger than the upper limit of rotation speed of the first generator determines, by a controller, whether the rotation speed of the first generator detected by the detector is larger than the upper limit of rotation speed of the first generator. The causing the first generator to generate electric power causes the first generator to generate electric power by the controller, when the rotation speed of the first generator detected by the detector is determined to be not larger than the upper limit of rotation speed of the first generator. The causing only the second generator to generate electric power causes only the second generator to generate electric power by the controller, when the rotation speed of the first generator detected by the detector is determined to be larger than the upper limit of rotation speed of the first generator.

Note that those comprehensive or specific aspects may be implemented by a system, a method, an integrated circuit, a computer program, or a computer-readable recording medium such as a CD-ROM, or may be implemented by any combination of the system, the method, the integrated circuit, the computer program, and the recording medium.

The present invention can provide a vehicular power source device that can suppress excessive rotation of a motor-driven generator and efficiently improve fuel efficiency.

### BRIEF DESCRIPTION OF DRAWINGS

FIG. 1 is a schematic configuration diagram illustrating a configuration of a vehicular power source system including a vehicular power source device according to an exemplary embodiment.
FIG. 2 is a flowchart illustrating operation of the vehicular power source device according to the exemplary embodiment.
FIG. 3 is a flowchart illustrating the operation of the vehicular power source device according to the exemplary embodiment.
FIG. 4 is a flowchart illustrating the operation of the vehicular power source device according to the exemplary embodiment.
FIG. 5 is a flowchart illustrating the operation of the vehicular power source device according to the exemplary embodiment.

### DESCRIPTION OF EMBODIMENT

Prior to describing an exemplary embodiment of the present invention, a problem of a conventional vehicular power source device will be briefly described. In a method described in PTL 1, regenerative energy obtained using a generator is consumed by an electric motor. This is a cause of hindering improvement of fuel efficiency.

In view of the above-described problem, an object of the present invention is to provide a vehicular power source device that can suppress excessive rotation of a motor-driven generator and efficiently improve fuel efficiency.

Hereinafter, the exemplary embodiment of the present invention will be described. Note that the exemplary embodiment described below illustrates a preferred specific example of the present invention. Accordingly, numerical values, shapes, materials, structural elements, arrangement positions and connection modes of the structural elements, steps, order of the steps, and the like illustrated in the following exemplary embodiment are merely examples, and therefore are not intended to limit the present invention. Therefore, among structural elements in the following exemplary embodiment, structural elements not recited in the independent claim indicating the broadest concept of the present invention are described as arbitrary structural elements.

The diagrams are schematic diagrams, and illustration is not necessarily strictly accurate. Note that, in the drawings, substantially identical components are denoted by like reference signs and repetitive explanations thereof will be omitted or simplified.

### (Exemplary embodiment)

### [1. Configurations of vehicular power source device and vehicular power source system]

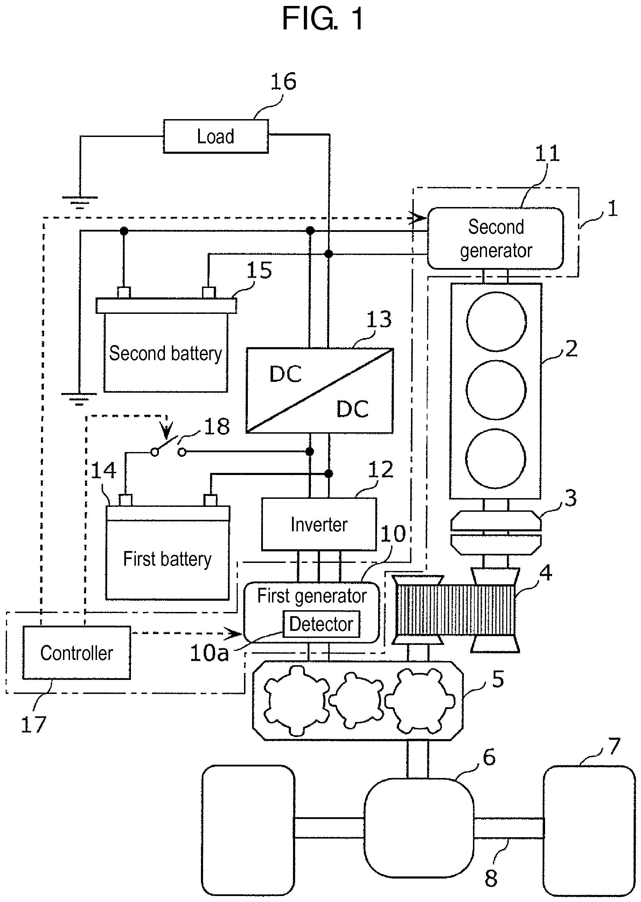

Hereinafter, an exemplary embodiment will be described with reference to FIGS. 1 to 5.

FIG. 1 is a schematic configuration diagram illustrating a configuration of a vehicular power source system including a vehicular power source device according to a first exemplary embodiment. As illustrated in FIG. 1, the vehicular power source system includes vehicular power source device 1, engine 2, torque converter 3, continuously variable transmission 4, reduction gear 5, differential gear 6, driving wheels 7, inverter 12, DC-DC converter 13, first battery 14, second battery 15, load 16, and switch 18.

Vehicular power source device 1 includes first generator 10 and second generator 11 that are motor-driven generators, controller 17, and detector 10a.

First generator 10 is a generator that generates electric power by using motive power output from engine 2 through torque converter 3, continuously variable transmission 4, and reduction gear 5. First generator 10 is also referred to as a motor generator, and is a motor-driven generator capable of powering for driving axle 8 and regenerating. In other words, first generator 10 generates motive power when receiving electric power from inverter 12, and transmits the motive power as torque to gears of reduction gear 5 to drive differential gear 6. In contrast, when receiving, through differential gear 6 and the gears of reduction gear 5, torque caused by rotation of driving wheels 7, first generator 10 generates electric power based on the torque. The electric power obtained by the power generation is charged into first battery 14 through inverter 12. First generator 10 rotates at a lower rotation speed than that of second generator 11 described below, and can generate electric power with higher efficiency than second generator 11.

Second generator 11 is also referred to as an alternator, and is a generator that generates electric power by using motive power output from engine 2. Second generator 11 can rotate at a higher rotation speed than an upper limit of a rotation speed of first generator 10.

Detector 10a is disposed in first generator 10. Detector 10a is configured with a rotation sensor such as a resolver, and detects rotation speed R of first generator 10.

Controller 17 is, for example, an electronic control unit (ECU). Controller 17 controls first generator 10. Specifically, when lockup of torque converter 3 is released, controller 17 increases regenerative power according to a rotation of axle 8, which is generated by first generator 10. With this configuration, controller 17 increases braking torque that is a load for braking axle 8, the braking torque being applied by first generator 10. Controller 17 also controls second generator 11.

Note that controller 17 may control inverter 12, DC-DC converter 13, switch 18, and the like that are described later based on each signal described above. Control of first generator 10 and second generator 11 performed by controller 17 will be described in detail later.

Engine 2 starts by a starter (not illustrated), and generates motive power. This motive power is transmitted to continuously variable transmission 4 through torque converter 3 as torque.

Torque converter 3 transmits the motive power output from engine 2 to continuously variable transmission 4. Torque converter 3 converts the torque from engine 2 as necessary, and transmits the torque to reduction gear 5 through continuously variable transmission 4.

Continuously variable transmission 4 is configured as a continuously variable transmission (CVT), for example, and transmits the torque transmitted from engine 2 through torque converter 3 to reduction gear 5. At this time, continuously variable transmission 4 transmits the torque to reduction gear 5 at a transmission gear ratio according to control from controller 17.

Reduction gear 5 decelerates the rotation speed of first generator 10, and transmits the torque to differential gear 6.

Differential gear 6 amplifies or attenuates the torque that is output from engine 2 and is transmitted through torque converter 3, continuously variable transmission 4, reduction gear 5, and the like, by setting the transmission gear ratio as appropriate. Differential gear 6 allocates and transmits the torque transmitted from reduction gear 5 to two driving wheels 7. Then two driving wheels 7 rotate and thus a vehicle is driven. Note that, in the present exemplary embodiment, two driving wheels 7 that are front wheels rotate as driving wheels. However rear wheels may rotate as the driving wheels, or four driving wheels may rotate as the driving wheels.

Driving wheels 7 rotate by using the motive power transmitted from reduction gear 5 through differential gear 6.

Inverter 12 converts a current from first battery 14 from a direct current (DC) into an alternating current (AC), and supplies AC power to first generator 10 based on control from controller 17.

DC-DC converter 13 outputs electric power stored in first battery 14 based on control from controller 17. In addition, DC-DC converter 13 outputs electric power stored in second battery 15 based on control from controller 17.

First battery 14 stores electric power generated by first generator 10. First battery 14 is a nickel hydrogen rechargeable battery or a lithium ion rechargeable battery, for example. First battery 14 is charged with electric power from first generator 10, or is charged by a charging apparatus provided outside the vehicle. Further first battery 14 may store electric power obtained from second battery 15 through DC-DC converter 13.

Second battery 15 stores electric power generated by second generator 11 or electric power obtained from first battery 14 through DC-DC converter 13. Second battery 15 is, for example, a lead storage battery.

Load 16 consumes electric power supplied from first battery 14 and second battery 15, to perform predetermined processing or operation for performing operation and control of the vehicle.

Switch 18 performs connection or disconnection between first battery 14 and DC-DC converter 13 as well as inverter 12, based on an instruction from controller 17. When switch 18 is turned on, that is, connected, electric power generated by first generator 10 or second generator 11 is charged into first battery 14. When switch 18 is turned off, that is, disconnected, charging of electric power generated by first generator 10 or second generator 11 into first battery 14 is stopped. A relay circuit may be used as switch 18, for example.

### [2. Operation of vehicular power source device]

Next, operation of vehicular power source device 1 will be described.

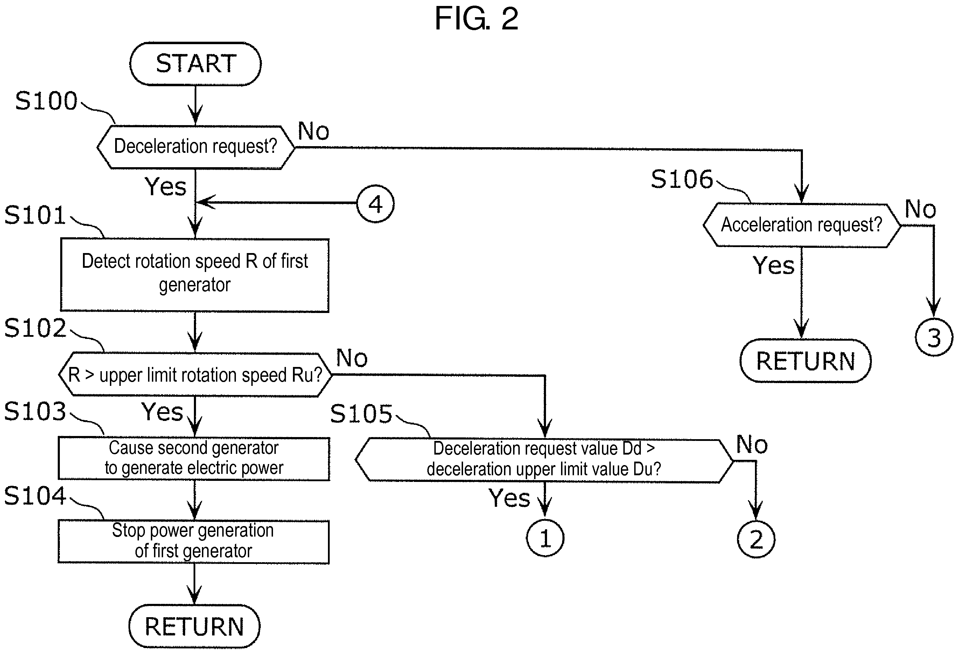

FIGS. 2 to 5 are flowcharts illustrating the operation of vehicular power source device 1 according to the present exemplary embodiment. During deceleration of the vehicle, vehicular power source device 1 performs (1) power generation using only second generator 11 when first generator 10 cannot regenerate due to axle 8 rotating at a high speed, performs (2) power generation using second generator 11 and first generator 10 to obtain a large amount of deceleration when axle 8 rotates at a low speed and a level of a deceleration request is high, and performs (3) power generation using only first generator 10 having high regeneration efficiency when the level of the deceleration request is low. In addition, controller 17 stops (4) power generation using first generator 10 and second generator 11 in a coasting state in which both acceleration and deceleration of the vehicle are not performed and, according to states of charge of first battery 14 and second battery 15, electric power charged in first battery 14 and second battery 15 is supplied to one of the two batteries having a smaller charged electric power amount from the other one of the two batteries having a larger charged electric power amount.

The deceleration request herein means that, for example, a driver (not illustrated) operates a brake to decelerate the vehicle. The level of the deceleration request being high herein means a case where deceleration with increased acceleration (urgent deceleration), for example, emergency braking is requested. The level of the deceleration request being low herein means a case where deceleration with decreased acceleration, for example, a case where the vehicle is gently decelerated is requested. In the present exemplary embodiment, a deceleration request value that is an absolute value of acceleration during deceleration, which is requested by operation of the driver is Dd, and a deceleration upper limit value that is a threshold to be compared with deceleration request value Dd is Du. Note that deceleration upper limit value Du is a value determined in advance based on a structure or performance of the vehicle, for example.

First, the case of performing power generation using only second generator 11, which is described in (1), will be described.

As illustrated in FIG. 2, when controller 17 has detected the deceleration request from a pressing amount or a pressing speed of a brake pedal (Yes in step S100), detector 10a detects rotation speed R of first generator 10 (step S101).

When determining that rotation speed R of first generator 10 is larger than upper limit rotation speed Ru of first generator 10 (Yes in step S102), controller 17 causes second generator 11 to generate electric power (step S103) and stops power generation using first generator 10 (step S104). Thus, vehicular power source device 1 performs power generation using only second generator 11.

Accordingly, when axle 8 rotates at a high speed, first generator 10 does not generate electric power, and therefore excessive rotation of first generator 10 can be suppressed. In addition, first generator 10 can be used up to a rotation speed immediately before a rotation speed of a rotor in first generator 10 reaches its upper limit, and therefore a large amount of regenerative power can be obtained. This can improve fuel efficiency of the vehicle.

When determining that rotation speed R of first generator 10 is not larger than upper limit rotation speed Ru of first generator 10 (No in step S102), controller 17 then determines whether deceleration request value Dd is larger than deceleration upper limit value Du (step S105).

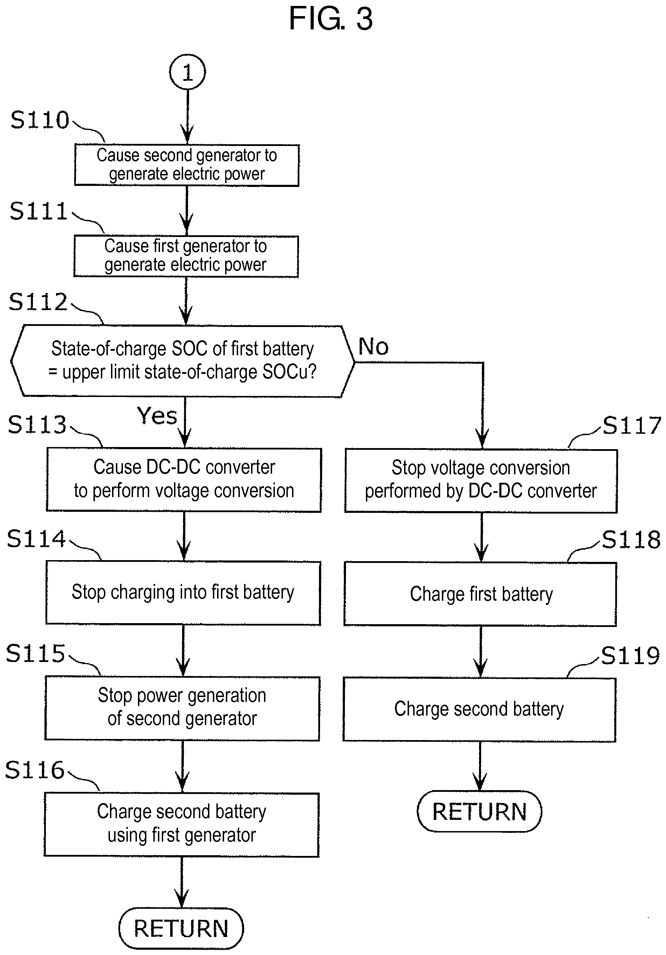

When deceleration request value Dd is larger than deceleration upper limit value Du (Yes in step S105), power generation using second generator 11 and first generator 10, which is described in (2), is performed in order to obtain a large amount of electric power for performing urgent deceleration in vehicular power source device 1. Specifically, operation illustrated in a flowchart of FIG. 3 is performed.

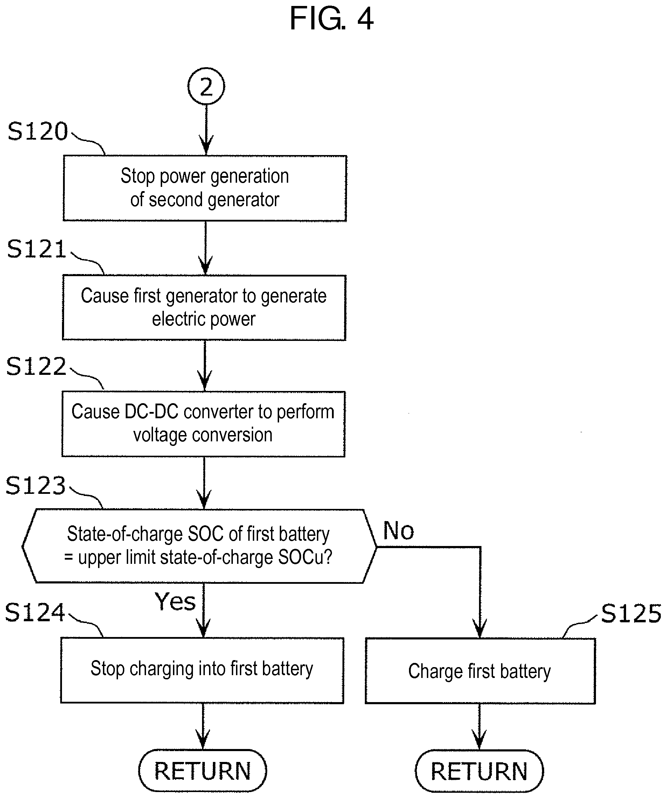

When deceleration request value Dd is not larger than deceleration upper limit value Du (No in step S105), power generation using only first generator 10, which is described in (3), is performed in order to perform power generation with high regeneration efficiency in vehicular power source device 1. Specifically, operation illustrated in a flowchart of FIG. 4 is performed.

Here, power generation using first generator 10 and second generator 11, which is described in (2), is performed as follows.

When determining that rotation speed R of first generator 10 is smaller than upper limit rotation speed Ru of first generator 10 (No in step S102 of FIG. 2), controller 17 then determines whether deceleration request value Dd is larger than deceleration upper limit value Du (step S105). When deceleration request value Dd is larger than deceleration upper limit value Du (Yes in step S105), as illustrated in FIG. 3, controller 17 causes second generator 11 to generate electric power (step S110) and subsequently causes first generator 10 to generate electric power (step S111). This causes the power generation using first generator 10 and second generator 11.

Note that, when first generator 10 and second generator 11 have already generated electric power, first generator 10 and second generator 11 may continuously generate electric power without a break.

Next, a state of charge of first battery 14 is determined (step S112) and when state-of-charge SOC of first battery 14 has reached upper limit state-of-charge SOCu of first battery 14 (Yes in step S112), controller 17 causes DC-DC converter 13 to perform voltage conversion (step S113), and transmits electric power generated by first generator 10 to load 16 through inverter 12 and DC-DC converter 13. At this time, controller 17 causes switch 18 to be turned off to stop charging the electric power generated by first generator 10 into first battery 14 (step S114). Controller 17 then stops power generation using second generator 11 (step S115), and the electric power generated by first generator 10 is supplied to second battery 15 and load 16 (step S116). Thus, second battery 15 is charged.

Note that state-of-charge SOC of first battery 14 means a state where electric power amount to SOC is charged in first battery 14. Upper limit state-of-charge SOCu means a state where electric power amount to SOCu that is an upper limit until which first battery 14 can charge is charged. The amount of electric power of SOCu is an amount determined in advance based on, for example, a structure or a material of first battery 14.

When state-of-charge SOC of first battery 14 has not reached upper limit state-of-charge SOCu of first battery 14 (No in step S112), controller 17 stops the voltage conversion performed by DC-DC converter 13 (step S117), and further causes switch 18 to be turned on. With this configuration, since switch 18 is turned on, controller 17 causes the electric power generated by first generator 10 to be charged to first battery 14 (step S118). In addition, controller 17 causes electric power generated by second generator 11 to be supplied to second battery 15 and load 16. Thus, second battery 15 is charged (step S119).

As described above, first generator 10 and second generator 11 simultaneously perform power generation, and therefore regenerative power can efficiently be obtained over a wide range of rotation speed.

Furthermore, power generation using only first generator 10, which is described in (3), is performed as follows.

When determining that rotation speed R of first generator 10 is not larger than upper limit rotation speed Ru of first generator 10 (No in step S102 of FIG. 2), controller 17 then determines whether deceleration request value Dd is larger than deceleration upper limit value Du (step S105). When deceleration request value Dd is not larger than deceleration upper limit value Du (No in step S105), as illustrated in FIG. 4, controller 17 stops power generation using second generator 11 (step S120), and causes only first generator 10 to operate, and performs power generation using first generator 10 (step S121).

Next, controller 17 causes DC-DC converter 13 to perform the voltage conversion (step S122). Thus, second battery 15 charges the electric power generated by first generator 10.

Subsequently, when state-of-charge SOC of first battery 14 has reached upper limit state-of-charge SOCu of first battery 14 (Yes in step S123), controller 17 causes switch 18 to be turned off, and stops charging the electric power generated by first generator 10 into first battery 14 (step S124). In other words, controller 17 cause the electric power generated by first generator 10 to be supplied to second battery 15 and load 16.

When state-of-charge SOC of first battery 14 has not reached upper limit state-of-charge SOCu of first battery 14 (No in step S123), controller 17 causes switch 18 to be turned on, and charges the electric power generated by first generator 10 into first battery 14 (step S125). In other words, controller 17 charges the electric power generated by first generator 10 into first battery 14 and second battery 15.

As described above, only first generator 10 generates electric power, and therefore regenerative power can efficiently be obtained. This can improve fuel efficiency of the vehicle.

Next, operation in the coasting state in which both acceleration and deceleration of the vehicle are not performed, which is described in (4), will be described herein.

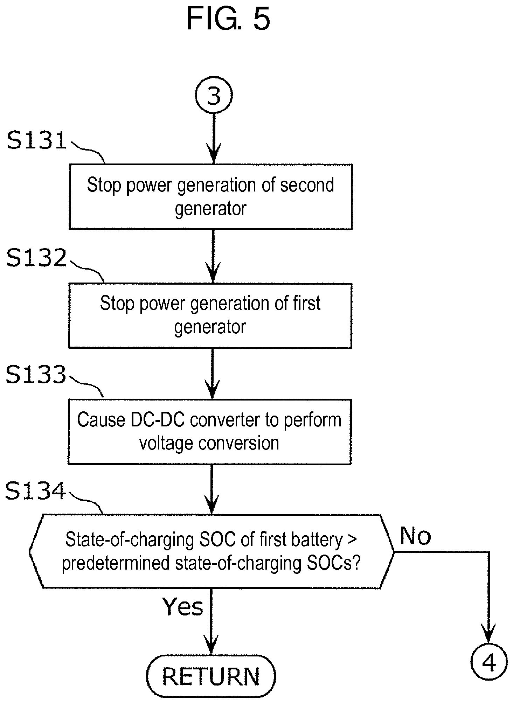

In the coasting state, as illustrated in FIG. 5, controller 17 first stops power generation using second generator 11 (step S131), and subsequently stops power generation using first generator 10 (step S132). Controller 17 then causes DC-DC converter 13 to perform the voltage conversion (step S133).

Here, when state-of-charge SOC of first battery 14 is larger than predetermined state-of-charge (predetermined amount of electric power) SOCs (Yes in step S134), controller 17 does not cause first generator 10 and second generator 11 to generate electric power, and causes the electric power charged in first battery 14 to be charged to second battery 15. At this time, the electric power charged in first battery 14 is also supplied to load 16. Note that predetermined state-of-charge SOCs means a state where predetermined electric power amount to SOCs is charged.

As described above, without causing first generator 10 and second generator 11 to generate electric power, the electric power charged in first battery 14 is charged into second battery 15 and is also supplied to load 16, and therefore the electric power in first battery 14 can efficiently be used.

When state-of-charge SOC of first battery 14 is not larger than predetermined state-of-charge SOCs (No in step S134), the operation subsequent to step S101 illustrated in FIG. 2 is performed again. In other words, at least one of first generator 10 and second generator 11 generates electric power, and the generated electric power is charged into first battery 14 or second battery 15. With this configuration, first generator 10 and second generator 11 are operated as necessary. Therefore, the electric power can efficiently be charged into first battery 14 and second battery 15.

Note that the case where state-of-charge SOC of first battery 14 is not larger than state-of-charge SOCs of the predetermined amount is a case where first generator 10 and second generator 11 are forcibly caused to generate electric power so as not to consume charged electric power in first battery 14 and second battery 15 fully in the coasting state, for example.

### [3. Effects and other benefits]

As described above, according to vehicular power source device 1 of the present exemplary embodiment, during deceleration of the vehicle, power generation is performed using first generator 10 and second generator 11 separately or in a combined manner, based on the rotation speed of axle 8 or engine 2 and existence of the deceleration request, for example, operation of the brake. Therefore, the excessive rotation of first generator 10 can be suppressed without performing control for supplying electric power from first generator 10 to second generator 11, or from second generator 11 to first generator 10. Accordingly, more regenerative energy can be used for battery charging or supply to accessories more efficiently.

The vehicular power source device according to one or more aspects has been described above based on the exemplary embodiment. However, the present invention is not limited to the exemplary embodiment. Configurations in which various variations conceived by those skilled in the art are applied to the present exemplary embodiment, and configurations established by combining structural elements in different exemplary embodiments may also fall within the scope of one or more aspects, without departing from the gist of the present invention.

For example, in the present exemplary embodiment, the first battery is defined as a nickel hydrogen rechargeable battery or a lithium ion rechargeable battery, and the second battery is defined as a lead storage battery, but the first battery and the second battery are not limited thereto, and other batteries may be used as the first battery and the second battery.

Controller 17 in the present exemplary embodiment only needs to control at least first generator 10 and second generator 11, but may control inverter 12, DC-DC converter 13, switch 18, and the like in addition to first generator 10 and second generator 11.

Detector 10a in the present exemplary embodiment is disposed in first generator 10, but is not limited thereto. Detector 10a may be disposed at other positions than first generator 10. For example, detector 10a may be disposed in controller 17.

Moreover, various modifications to the exemplary embodiment that are conceived by those skilled in the art or other exemplary embodiments obtainable by freely combining the structural elements or functions in the exemplary embodiment and the modifications without departing from the gist of the present invention may be included in the present invention.

### INDUSTRIAL APPLICABILITY

The present invention is applicable to a vehicle such as a hybrid vehicle.

### REFERENCE MARKS IN THE DRAWINGS

- 1: vehicular power source device
- 2: engine
- 3: torque converter
- 4: continuously variable transmission
- 5: reduction gear
- 6: differential gear
- 7: driving wheel
- 8: axle
- 10: first generator
- 10a: detector
- 11: second generator
- 12: inverter
- 13: DC-DC converter
- 14: first battery
- 15: second battery
- 16: load
- 17: controller
- 18: switch

## Claims

1. A vehicular power source device to be mounted on a vehicle, comprising:
a first generator;
a second generator configured to generate electric power at a higher rotation speed than an upper limit of a rotation speed of the first generator;
a detector configured to detect the rotation speed of the first generator; and
a controller configured to control power generation of the first generator and the second generator,
wherein the controller
causes the first generator to generate electric power when the rotation speed of the first generator detected by the detector is not larger than the upper limit of the rotation speed of the first generator, and
causes only the second generator to generate electric power when the rotation speed of the first generator detected by the detector is larger than the upper limit of the rotation speed of the first generator.

2. The vehicular power source device according to claim 1, wherein,
wherein the controller
causes the second generator and the first generator to generate electric power when the rotation speed of the first generator detected by the detector is not larger than the upper limit of the rotation speed of the first generator and a deceleration request value for decelerating the vehicle is larger than a deceleration upper limit value determined in advance, and
causes only the first generator to generate electric power when the rotation speed of the first generator detected by the detector is not larger than the upper limit of the rotation speed of the first generator and the deceleration request value is not larger than the deceleration upper limit value.

3. The vehicular power source device according to any one of claims 1 or 2, further comprising:
a first battery and a second battery that charge electric power generated by the first generator and the second generator.

4. The vehicular power source device according to claim 3, wherein, when the vehicle performs neither acceleration nor deceleration, the controller causes the second battery to charge electric power charged in the first battery, when the first battery has charged a predetermined amount of electric power and the second battery has not charged a predetermined amount of electric power.

5. The vehicular power source device according to claim 3, wherein, when the vehicle performs neither acceleration nor deceleration, the controller controls the first generator and the second generator such that at least one of the first generator and the second generator generates electric power when at least one of the first battery and the second battery has not charged a predetermined amount of electric power.

6. A method of controlling a vehicular power source device to be mounted on a vehicle, the method comprising:
detecting a rotation speed of a first generator by a detector;
determining, by a controller, whether the rotation speed of the first generator detected by the detector is larger than an upper limit of the rotation speed of the first generator;
causing, by the controller, the first generator to generate electric power when it is determined that the rotation speed of the first generator detected by the detector is not larger than the upper limit of the rotation speed of the first generator; and
causing, by the controller, only a second generator that generates electric power at a higher rotation speed than the upper limit of the rotation speed of the first generator to generate electric power, when the rotation speed of the first generator detected by the detector is determined to be larger than the upper limit of the rotation speed of the first generator.

7. The method of controlling a vehicular power source device according to claim 6, further comprising,
causing, by the controller, the first generator and the second generator to generate electric power when the rotation speed of the first generator detected by the detector is not larger than the upper limit of the rotation speed of the first generator, and a deceleration request value for decelerating the vehicle is larger than the deceleration upper limit value determined in advance.

8. The method of controlling a vehicular power source device according to claim 6, further comprising,
causing, only the first generator to generate electric power when the rotation speed of the first generator detected by the detector is not larger than the upper limit of the rotation speed of the first generator, and a deceleration request value for decelerating the vehicle is not larger than a deceleration upper limit value determined in advance.

9. The method of controlling a vehicular power source device according to any one of claims 6 to 8, further comprising, when the vehicle performs neither acceleration nor deceleration, causing a second battery to charge electric power charged in a first battery when the first battery and a second battery that charge electric power generated by the first generator and the second generator, the first battery has charged a predetermined amount of electric power, and the second battery has not charged a predetermined amount of electric power.

10. The method of controlling a vehicular power source device according to any one of claims 6 to 8, further comprising, when the vehicle performs neither acceleration nor deceleration, generating electric power using at least one of the first generator and the second generator, when at least one of a first battery and a second battery that charge electric power generated by the first generator and the second generator have not charged a predetermined amount of electric power.
